# EUROPÄISCHE PATENTSCHRIFT

(11) **EP 2 062 775 B1**
(45) Veröffentlichungstag und Bekanntmachung des Hinweises auf die Patenterteilung: **27.06.2012**
(21) Anmeldenummer: 08017280.2
(22) Anmeldetag: 01.10.2008
(51) Int. Cl.: B60Q 1/08, F21V 14/08

(54) **Projektionsscheinwerferanordnung für Fahrzeuge**
Projection headlight assembly for vehicles
Dispositif de phares de projection pour véhicules

(30) Priorität: 22.11.2007 DE 102007056382
(43) Veröffentlichungstag der Anmeldung: 27.05.2009
(73) Patentinhaber: Hella KGaA Hueck & Co., 59552 Lippstadt (DE); Volkswagen AG, 38436 Wolfsburg (DE)
(72) Erfinder: Ehm, Matthias, 59558 Lippstadt (DE)
(74) Vertreter: Ostermann, Thomas

(56) Entgegenhaltungen:
- EP-A- 1 640 658
- EP-A- 1 798 468
- WO-A-2008/037388

## Beschreibung

Die Erfindung betrifft eine Projektionsscheinwerferanordnung für Fahrzeuge nach dem Oberbegriff des Patentanspruchs 1.

Aus der DE 197 39 089 A1 ist ein Projektionsscheinwerfer für Fahrzeuge bekannt, der über eine Lichtquelle, einen Reflektor, eine Linse und über eine zwischen der Linse und dem Reflektor angeordnete Blendeneinrichtung verfügt. Die Blendeneinrichtung weist mehrere in horizontaler Richtung und quer zur optischen Achse der Linse verlaufende Blendenkanten auf, welche jeweils eine Hell-Dunkel-Grenze einer vorgegebenen Lichtverteilung erzeugen. Die Blendeneinrichtung ist als eine Blendenwelle ausgebildet, die um ihre eigene Achse drehbar in mehrere Drehstellungen verstellbar angeordnet ist, wobei jeweils eine einzige Blendenkante der Blendenwelle wirksam ist. Durch die Ausgestaltung der durchgehenden Blendenkanten kann neben der Fernlicht- und Abblendlichtfunktion auch eine Stadtlicht-, Landstraßenlicht- und Autobahnlichtfunktion bereitgestellt werden. Die Anzahl der Blendenkanten sind jedoch aufgrund der begrenzten Dimensionierung der Blendenwelle begrenzt. Es handelt sich bei den durch die Blendenkanten abgebildeten Lichtverteilungen jeweils um standardisierte Lichtverteilungen, die in der jeweiligen Betriebsstellung eine fixierte Lichtverteilung unabhängig von der Verkehrssituation repräsentieren.

Aus der DE 101 25 463 A1 ist ein Projektionsscheinwerfer für Fahrzeuge bekannt, der über eine Lichtquelle, einen Reflektor, eine Linse und über eine zwischen der Linse und dem Reflektor angeordnete Blendeneinrichtung verfügt. Die Blendeneinrichtung weist eine feststehende Blende und zwei um eine horizontale Achse verschwenkbare Blenden auf. Die Blenden weisen jeweils eine unterschiedliche Blendenkonturierung auf, wobei in Abhängigkeit von der Betriebsstellung der Blendeneinrichtung Blendenkanten der einzelnen Blenden die Hell-Dunktel-Grenze der vorgegebenen Lichtverteilung abbilden. Eine an die Verkehrssituation angepasste Bereitstellung einer Fernlichtverteilung mit einem Lichtaussparungsbereich, in dem sich ein entgegenkommendes und/oder vorausfahrendes Fahrzeug befindet, ist nicht möglich.

Aus der DE 10 2005 014 953 A1 ist eine Scheinwerferanordnung bekannt, die als Lichtquelle eine Mehrzahl von mittels einer Steuereinheit selektiv ansteuerbaren LED-Leuchtelementen aufweist. Den matrixartig angeordneten LED-Leuchtelementen ist eine Blendeneinrichtung vorgelagert, die aus matrixartig angeordneten kleinen Blendelementen aufgebaut ist. Die Blenden sind mittels der Steuereinheit selektiv in eine Öffnungs- oder Schließstellung bringbar, so dass eine Mehrzahl von unterschiedlichen Bereichen des Fahrzeugvorfeldes ausleuchtenbare Lichtbündel in Abhängigkeit von der aktuellen Verkehrssituation sich zu einer Gesamtlichtverteilung überlagern. Auf diese Weise kann ein Teilbereich (Lichtaussparungsbereich) der Fernlichtverteilung ausgespart werden - wie es beispielsweise auch aus der DE 10 2004 042 092 A1 bekannt ist -, so dass ein entgegenkommendes und/oder vorausfahrendes Fahrzeug nicht geblendet wird. Nachteilig an der bekannten Scheinwerferanordnung ist jedoch der relativ aufwändige Aufbau.

Aus der WO 2008/037388 A2 ist eine Projektionsscheinwerferanordnung mit nach dem Projektionsprinzip arbeitenden Projektionsscheinwerfern bekannt, die jeweils eine Lichtquelle, einen Reflektor, eine Linse sowie eine Blendeneinrichtung aufweisen. Die Blendeneinrichtung weist Blenden auf, die vertikal verschiebbar gelagert sind.

Aus der EP 1 640 658 A2 ist eine Projektionsscheinwerferanordnung für Fahrzeuge mit einem linken und rechten Projektionsscheinwerfer bekannt, wobei der Projektionsscheinwerfer nach dem Projektionsprinzip arbeitend eine Lichtquelle, einen Reflektor, eine Linse und eine Blendeneinrichtung aufweist. Die Blendeneinrichtung weist eine feststehende erste Blende zur Erzeugung einer Fernlichtverteilung und eine schwenkbar gelagerte zweite Blende zur Erzeugung einer Abblendlichtverteilung auf. Die erste Blende und die zweite Blende tragen in einer Betriebsstellung zur Bildung einer Blendenkantenoberfläche bei.

Aufgabe der vorliegenden Erfindung ist es, eine Projektionsscheinwerferanordnung für Fahrzeuge derart weiterzubilden, dass eine möglichst große Ausleuchtung des Fahrzeugvorfeldes ermöglicht wird, ohne dass ein entgegenkommendes und/oder vorausfahrendes Kraftfahrzeug (Fahrer) geblendet wird.

Zur Lösung dieser Aufgabe weist die Erfindung die Merkmale des Patentanspruchs 1 auf.

Der besondere Vorteil der Erfindung besteht darin, dass durch Integration bzw. Kombination von einer feststehende Blende und einer beweglichen (schwenkbaren) Blende dahingehend, dass in einer Betriebsstellung der Blendeneinrichtung die optisch wirksame Blendenkantenoberfläche zum einen zumindest teilweise durch eine Blendenkantenoberfläche der ersten Blende und zum anderen zumindest teilweise durch eine Blendenkantenoberfläche der zweiten Blende gebildet wird, eine verbesserte Fernlicht-Betriebsstellung ermöglicht wird. Vorteilhaft kann eine scharfe Abbildung der Blendenkante insbesondere zu einer vertikalen Hell-Dunkel-Grenze einer adaptiven Fernlichtverteilung ermöglicht werden und somit das Risiko einer Blendung des vorausfahrenden und/oder entgegenkommenden Verkehrsteilnehmers minimiert werden. In einer Abblendlicht-Betriebsstellung kann die Blendenkantenoberfläche der feststehenden ersten Blende in Verbindung mit der eingeschwenkten Blendenkantenoberfläche der zweiten Blende unter Vermeidung eines unerwünschten Farbsaumeffektes, der sich oberhalb der Hell-Dunkel-Grenze durch die Linse einstellen würde, erzeugt werden. Durch die scharfe Abbildung der vertikalen Hell-Dunkel-Grenze in der Fernlicht-Betriebstellung kann somit die Breite des Lichtaussparungsbereiches enger an das nicht zu blendende entgegenkommende und/oder vorausfahrende Fahrzeug ausgelegt werden. Nach der Erfindung weisen die erste Blenden eines linken Projektionsscheinwerfers und eines rechten Projektionsscheinwerfers jeweils einen sprungförmigen bzw. vertikalen Blendenkantenbereich auf, so dass durch Überlagerung einer durch den linken Projektionsscheinwerfer erzeugten ersten Teillichtverteilung und einer durch den rechten Projektionsscheinwerfer erzeugten zweiten Teillichtverteilung ein Lichtaussparungsbereich zwischen einer ersten Flanke und einer zweiten Flanke der Fernlichtverteilung gebildet wird. Vorteilhaft kann dieser Lichtaussparungsbereich auf zumindest einen Teil des vorausfahrenden und/oder entgegenkommenden Fahrzeugs ausgerichtet sein, so dass bei Vermeidung der Blendung dieses Fahrzeugs (Fahrer) eine optimale Ausleuchtung für den Fahrzeugführer gegeben ist.

Nach einer bevorzugten Ausführungsform der Erfindung weist die zweite Blende zwei synchron verschwenkbare Blendenflüge auf, die sich jeweils entlang einer Flachseite der ersten Blende erstrecken. Vorteilhaft können somit die Blendenflügel in der Abblendlicht-Betriebsstellung zusammen mit einer Blendenoberkante der festehenden ersten Blende eine im Querschnitt konvexförmige resultierende Blendenkantenoberfläche bilden, so dass dem Auftreten eines unerwünschten Farbsaumeffektes entgegengewirkt wird. In der Fernlicht-Betriebsstellung kann die relativ schmale Blendenkantenoberfläche der ersten Blende allein wirksam sein, wobei durch die Lage der ersten Blende in der Brennebene der Linse eine optimale Abbildung ermöglicht wird.

Nach einer Weiterbildung der Erfindung sind die Blendenkantenoberfläche der Blendenflügel der zweiten Blende in der Abblendlicht-Betriebsstellung bündig zu der Blendenkantenoberfläche der ersten Blende angeordnet, so dass ein im Querschnitt stetiger, vorzugsweise bogenförmiger Verlauf der Blendenkantenoberfläche gegeben ist. Hierdurch lässt sich ein unerwünschter Farbsaumeffekt vermeiden. Nach einer Weiterbildung der Erfindung sind der rechte und der linke Projektionsscheinwerfer mit einer Sensoreinheit und einer Steuereinheit gekoppelt, wobei mittels der Sensoreinheit die aktuelle Position des entgegenkommenden und/oder vorausfahrenden Fahrzeugs ermittelbar ist. In Abhängigkeit von den Positionsdaten können dann die ersten Blenden bzw. der rechte Projektionsscheinwerfer und der linke Projektionsscheinwerfer derart um eine vertikale Achse mittels einer Stelleinheit verschwenkt werden, dass sich der Lichtaussparungsbereich der Fernlichtverteilung stets in Überdeckung mit dem vorausfahrenden und/oder entgegenkommenden Fahrzeug befindet.

Nach einer ersten Variante der Erfindung kann in einem Abschnitt der Blendeneinrichtung die Hell-Dunkel-Grenze der Abblendlichtverteilung durch Überlagerung einer Blendenkantenoberfläche der ersten Blende und der zweiten Blende erzielt werden. Hierbei erstreckt sich die Blendenkantenoberfläche der zweiten Blende über die gesamte Länge der ersten Blende.

Nach einer zweiten Variante der Erfindung kann die zweite Blende kürzer ausgebildet sein als die erste Blende, wobei in der Abblendlicht-Betriebsstellung ausschließlich ein zweiter Abschnitt der ersten Blende zur Abbildung der Hell-Dunkel-Grenze beiträgt. Wesentlich ist hierbei, dass in der Abblendlicht-Betriebsstellung eine Auskehlung der ersten Blende durch eine Blendenfläche der zweiten Blende abgedeckt ist.

Ausführungsbeispiele der Erfindung werden nachfolgend anhand der Zeichnungen näher erläutert.

Es zeigen:
- Figur 1a: eine schematische Draufsicht auf ein Fahrzeug mit einer Projektionsscheinwerferanordnung be- stehend aus einem rechte Projektionsscheinwerfer und einem linken Projektionsscheinwerfer,
- Figur 1b: eine schematische Darstellung von zwei gespie- gelt angeordneten Blenden des rechten Projekti- onsscheinwerfers und des linken Projektions- scheinwerfers zur Erzeugung einer Fernlichtver- teilung,
- Figur 1c: eine schematische Darstellung einer Fernlicht- verteilung mit einer durch den linken Projekti- onsscheinwerfer erzeugten Teillichtverteilung und einer durch den rechten Projektionsschein- werfer erzeugten rechten Teillichtverteilung, wobei durch Abbildung von sprungförmigen Blen- denkantenbereichen einer ersten feststehenden Blende vertikale Flanken eines Lichtaussparungs- bereiches erzeugt werden,
- Figur 2a: eine schematische Vorderansicht einer Blenden- einrichtung nach einer ersten Ausführungsform in einer Fernlicht-Betriebsstellung, wobei eine feststehende erste Blende einen vertikalen Blen- denkantenbereich aufweist,
- Figur 2b: einen Querschnitt durch die Blendeneinrichtung gemäß Figur 2a entlang der Schnittlinie II-II,
- Figur 3a: eine Vorderansicht der Blendeneinrichtung nach einer ersten Ausführungsform in einer Abblend- licht-Betriebsstellung,
- Figur 3b: einen Querschnitt durch die Blendeneinrichtung gemäß Figur 3a entlang der Linie III-III,
- Figur 4: eine Draufsicht auf die in der Abblendlicht- Betriebsstellung befindliche Blendeneinrichtung gemäß Figur 3a,
- Figur 5: eine Vorderansicht einer Blendeneinrichtung nach einer zweiten Ausführungsform in einer Fern- licht-Betriebsstellung, wobei eine feststehende erste Blende zwei vertikale Blendenkantenberei- che aufweist,
- Figur 6: eine Draufsicht auf die Blendeneinrichtung gemäß Figur 5 in einer Abblendlicht-Betriebsstellung derselben,
- Figur 7: eine Vorderansicht einer Blendeneinrichtung nach einer dritten Ausführungsform in einer Fern- licht-Betriebsstellung, wobei eine zweite verschwenkbare Blende kürzer ausgebildet ist als eine feststehende erste Blende,
- Figur 8: eine Vorderansicht der Blendeneinrichtung nach der dritten Ausführungsform in einer Abblend- licht-Betriebsstellung und
- Figur 9: eine Draufsicht auf die Blendeneinrichtung nach der dritten Ausführungsform in der Abblendlicht- Betriebsstellung.

Eine erfindungsgemäße Projektionsscheinwerferanordnung 1 besteht im Wesentlichen aus einem linken Projektionsscheinwerfer 2 und einem rechten Projektionsscheinwerfer 3, die jeweils eckseitig in einer Karosserieöffnung eines Fahrzeugbugs eingefasst sind.

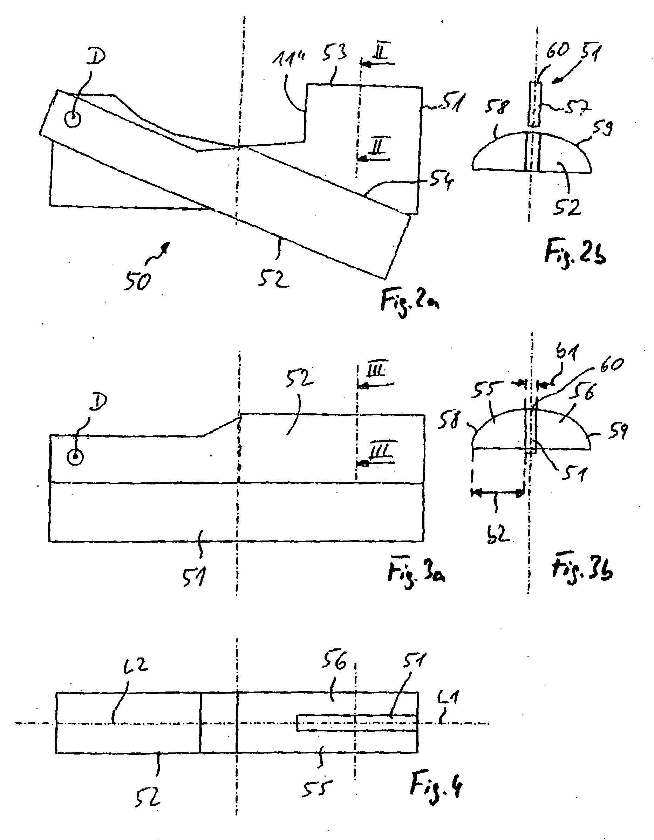

Der linke Projektionsscheinwerfer 2 und der rechte Projektionsscheinwerfer 3 weisen jeweils einen schalenförmigen Reflektor 5 auf, an dessen ersten Brennort eine Lichtquelle 4 angeordnet ist. In der Nähe eines zweiten Brennortes des Reflektors 5 ist eine Linse 6 angeordnet. Der linke Projektionsscheinwerfer 2 und der rechte Projektionsscheinwerfer 3 weisen jeweils eine zwischen dem Reflektor 5 und der Linse 6 angeordnete Blendeneinrichtung 50 nach einer ersten Ausführungsform gemäß den Figuren 2a bis 4 auf. Wie besser aus der Figur 2a ersichtlich ist, bestehen die den jeweiligen Projektionsscheinwerfern 2, 3 zugeordneten Blendeneinrichtungen 50 jeweils aus einer feststehenden Blende 51 und einer um eine parallel zu einer optischen Achse verlaufenden Drehachse D schwenkbar angeordnete zweite Blende 52. Die feststehende erste Blende 51 weist den Verlauf einer Blendenkante 53 auf zur Erzeugung einer Fernlichtverteilung. Die zweite Blende 52 weist den Verlauf einer Blendenkante 54 zur Erzeugung einer asymmetrischen Abblendlichtverteilung auf. Vorzugsweise ist die zweite Blende 52 schwenkbar an der ersten Blende 51 gelagert.

In den Figuren 2a und 2b ist die dem linken Projektionsscheinwerfer 2 zugeordnete Blendeneinrichtung 50 in einer Fernlicht-Betriebsstellung dargestellt, in der sich die zweite Blende 52 in einer unteren Schwenkstellung befindet, in der sie im Wesentlichen unterhalb der Blendenkante 53 der ersten Blende 51 angeordnet ist.

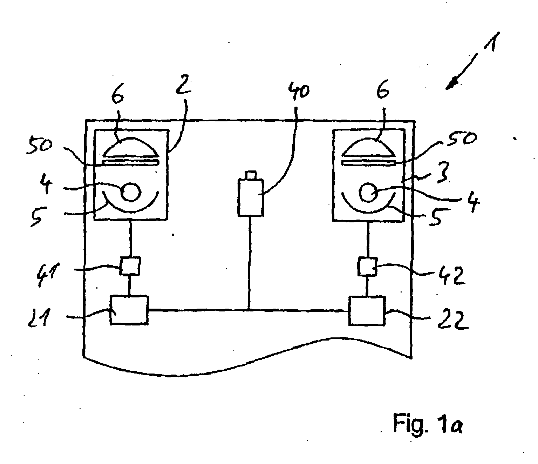

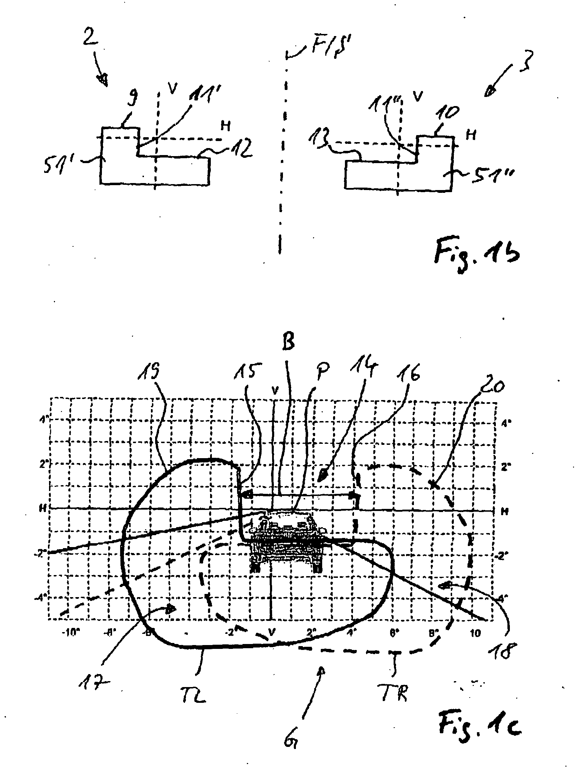

In Figur 1b ist aus Vereinfachungsgründen eine dem linken Projektionsscheinwerfer 2 zugeordnete erste feststehende Blende 51' und eine dem rechten Projektionsscheinwerfer 3 zugeordnete zweite feststehende Blende 51" dargestellt. Die erste feststehende Blende 51' des linken Projektionsscheinwerfers 2 ist bezüglich einer vertikalen Spiegelebene S, die im Bereich einer Fahrzeuglängsachse F angeordnet sein kann, gespiegelt zu der zweiten feststehenden Blende 51'' des rechten Projektionsscheinwerfers 3 angeordnet. Auf einer der Fahrzeuglängsachse F abgewandten Seite der feststehenden Blenden 51', 51" weist einen erhöhten Blendenkantenbereich 9 bzw. 10 auf. Der äußere Blendenkantenbereich 9, 10 ist über einen vorzugsweise in vertikaler Richtung verlaufenden sprungsförmigen Blendenkantenbereich 11', 11'' gegenüber einem inneren Blendenkantenbereich 12 bzw. 13 parallel versetzt angeordnet. Die feststehenden Blenden 51', 51'' der Projektionsscheinwerfer 2, 3 weisen somit die gleiche Blendengeometrie auf, sind jedoch bezüglich einer vertikalen Ebene S gespiegelt angeordnet.

Wie aus Figur 1c zu ersehen ist, überlagern sich in der Fernlicht-Betriebsstellung eine durch den linkem Projektionsscheinwerfer 2 erzeugte erste Teillichtverteilung (linke Teillichtverteilung TL) und eine durch den rechten Projektionsscheinwerfer 3 gebildete zweite Teillichtverteilung (rechte Teillichtverteilung TR - gestrichelt gezeichnet) zu einer Fernlicht-Gesamtlichtverteilung G, die in der Mitte einen Lichtaussparungsbereich 14 aufweist. Der Lichtaussparungsbereich 14 wird durch eine erste Flanke 15 der ersten Teillichtverteilung TL und durch eine zweite Flanke 16 der zweiten Teillichtverteilung TR begrenzt. Die Fernlicht-Gesamtlichtverteilung G entspricht einer herkömmlichen Fernlichtverteilung mit dem Unterschied, dass ein mittlerer Bereich, in dem sich die Vertikale V erstreckt, von der Ausleuchtung ausgespart ist. Dies wird erreicht durch einen bezüglich der optischen Achse horizontalen Versatz der sprungförmigen Blendenkantenbereiche 11', 11'' der feststehenden Blenden 51', 51''. Durch das Vorsehen des Lichtaussparungsbereiches 14 kann die Blendung eines im mittleren Straßenraum befindlichen vorausfahrenden Fahrzeugs P verhindert werden.

Die erste Teillichtverteilung TL und die zweite Teillichtverteilung TR weisen jeweils einen Basisleuchtbereich 17 bzw. 18 auf, wobei sich von dem Basisleuchtbereich 17 der linken Teillichtverteilung TL auf einer linken Seite ein linker Leuchtfingerbereich 19 und sich von dem Basisleuchtbereich 18 der rechten Teillichtverteilung TR auf einer rechten Seite ein rechter Leuchtfingerbereich 20 einen hinteren Straßenbereich ausleuchtet.

Die Sprungkante 11' des dem linken Projektionsscheinwerfers 2 zugeordneten feststehenden Blendenelementes 51' wird zu der ersten vertikalen Flanke 15 (vertikale Hell-Dunkel-Grenze) und die Sprungkante 11" des dem rechten Projektionsscheinwerfers 3 zugeordneten feststehenden Blendenelementes 51" zu der zweiten vertikalen Flanke 16 (vertikale Hell-Dunkel-Grenze) der Fernlicht-Gesamtlichtverteilung G abgebildet.

In Figur 2a ist die feststehende erste Blende 51 der Blendeneinrichtung 50 des rechten Projektionsscheinwerfers 3 mit einer im Vergleich zu Figur 1b leicht abgewandelten Konturierung dargestellt. Wesentlich ist, dass die feststehende Blende 51 einen sprungförmigen Blendenkantenbereich 11'' aufweist zur Abbildung der vertikalen Flanke 16 der Fernlicht-Gesamtlichtverteilung G. In dieser Fernlicht-Betriebsstellung ist die Blendenkante 53 der feststehenden Blende 51 oberhalb der Blendenkante 54 der schwenkbaren Blende 52 angeordnet. Die schwenkbare Blende 52 befindet sich somit in einer Nichtbetriebsstellung, in der ausschließlich die feststehende Blende 51 wirksam ist.

Wie insbesondere aus den Figuren 3b und 4 deutlich wird, weist die schwenkbare Blende 52 zwei Blendenflügel 55, 56 auf, die sich zu beiden Seiten einer Blendenfläche 57 (Flachseite) der ersten Blende 51 erstrecken. Die Blendenflügel 55, 56 sind unter Bildung einer Vorspannung an dem im Bereich der Drehachse D angeordneten Lager befestigt, so dass sie unter Bildung einer Anlagekraft an den Flachseiten 5, 17 der ersten Blende 51 anliegen. Die durch die beiden Blendenflügel 55, 56 gebildete zweite Blende 52 weist eine Längsmittelebene L2 auf, die in der gleichen Ebene liegt wie eine Längsmittelebene L1 der ersten Blende 51. Damit eine scharfe Abbildung insbesondere des sprungförmigen Blendenkantenbereiches 11', 11" der ersten Blende 51 erzielt wird, erstreckt sich die erste Blende 51 in einer Brennfläche der Linse 6. Hierdurch kann eine scharfe Hell-Dunkel-Grenze im Bereich der Flanken 15, 16 herbeigeführt werden, so dass der Lichtaussparungsbereich 14 eng an das detektierte vorausfahrende und/oder entgegenkommende Fahrzeug ausgelegt werde kann.

In einer Abblendlichtstellung der Blendeneinrichtung 15 wird die zweite Blende 52 durch ein nicht dargestelltes Stellmittel nach oben geschwenkt, so dass zur Erzeugung der Hell-Dunkel-Grenze der Abblendlichtverteilung die asymmetrische Blendenkantenkontur der zweiten Blende 52 wirksam ist. Zur Vermeidung eines unerwünschten Farbsaumeffektes ist die zweite Blende 52 derart in eine obere Schwenkstellung verbracht, dass im Querschnitt bogenförmige Blendenkantenoberflächen 58, 59 der Blendenflügel 55 bzw. 56 bündig zu einer Blendenkantenoberfläche 60 der ersten Blende 51 angeordnet sind. Hierdurch ergibt sich ein im Querschnitt konvexförmiger Blendenkantenverlauf in einem ersten Abschnitt 61 der Blendeneinrichtung 15. Aus Figur 3b ist ersichtlich, dass eine Breite b1 der Blendenkantenoberfläche 61 der ersten Blende 51 kleiner ist als eine Breite b2 der Blendenkantenoberflächen 58 bzw. 59 der Blendenflügel 55, 56.

Die feststehende Blende 51 und die Blendenflügel 55, 56 der zweiten Blende 52 sind im Wesentlichen plattenförmig ausgebildet, die sich in einer vertikalen Richtung erstrecken.

Der ersten Blende 51 ist jeweils eine Steuereinheit 21, 22 zugeordnet, die jeweils auf eine Stelleinheit 41 bzw. 42 einwirken, so dass zumindest die erste Blende 51 bzw. der linke Projektionsscheinwerfer 2 bzw. der rechte Projektionsscheinwerfer 3 jeweils um eine vertikale Achse verschwenkbar sind. Zu diesem Zweck weisen die Stelleinheiten 41, 42 jeweils einen Schwenkaktor, beispielsweise einen Elektromotor auf, mittels derer der linke Projektionsscheinwerfer 2 und der rechte Projektionsscheinwerfer 3 unabhängig voneinander in unterschiedliche Schwenkstellungen unter Aufrechterhaltung der Fernlicht-Betriebsstellung verschwenkbar ist.

Zur Erzielung einer an die Position und/oder Größe des vorausfahrenden und/oder entgegenkommenden Fahrzeugs abhängigen Lichtaussparungsbereiches 14 werden der linke Projektionsscheinwerfer 2 und der rechte Projektionsscheinwerfer 3 derart um einen vorgegebenen Schwenkwinkel nach rechts und/oder nach links bezüglich einer vertikalen Achse verschwenkt, dass das vorausfahrende und/oder entgegenkommende Fahrzeug stets durch den Lichtaussparungsbereich 14 abgedeckt ist. Vorzugsweise ist der Lichtaussparungsbereich 14 nicht größer als das Fahrzeug selbst, damit eine optimale Ausleuchtung des Fahrzeugvorfelds für den Fahrzeugführer gewährleistet ist. Beispielsweise können die Projektionsscheinwerfer 2, 3 synchron nach links oder rechts verschwenkt werden. Beispielsweise können die Projektionsscheinwerfer 2, 3 auch in entgegengesetzter Richtung verschwenkt werden, so dass ein verbreiterter Lichtaussparungsbereich 14 geschaffen wird. Erreicht der Lichtaussparungsbereich 14 eine maximale Breite, in der nicht alle vorausfahrenden und/oder entgegenkommenden Fahrzeuge erfasst werden, wird mittels der Steuereinheiten 21, 22 die Blendeneinrichtung 50 in die Abblendlicht-Betriebsstellung verbracht, so dass eine unerwünschte Blendung des entgegenkommenden bzw. vorausfahrenden Verkehrsteilnehmers vermieden wird. Bei Verschwenken der feststehenden Blenden 51 bzw. der Projektionsscheinwerfer 2, 3 in Richtung der Fahrzeuglängsachse F kann es zu einer Überdeckung der Flanken 15, 16 der Teillichtverteilungen TL, TR kommen, so dass eine herkömmliche Fernlichtverteilung erzeugt wird.

Zur Verstellung der Projektionsscheinwerfer 2, 3 sind die Steuereinheiten 21, 22 vorgesehen, an deren Eingang ein von einer Sensoreinheit 40 bereitgestelltes Sensorsignal liegt. Die Sensorseinheit 40 kann beispielsweise als ein Kamerasystem ausgebildet sein, das das gesamte Vorfeld (vorderseitiger Straßenraum) des Fahrzeugs erfasst und mögliche Fahrzeuge P detektiert. Die Sensoreinheit 40 ist derart aufgebaut, dass sie die Lage und/oder die Entfernung der Projektionsscheinwerfer 2, 3 zu einem entgegenkommenden und/oder vorausfahrenden Verkehrsteilnehmer (Fahrzeug) im Vorfeld erfasst. Die Steuereinheit 21, 22 kann einen Mikrokontroller bzw. einen Mikroprozessor mit einem Speicher umfassen, in dem ein Lichtsteuerungsprogramm integriert ist.

Vorzugsweise erfolgt ein Nachführen des Lichtaussparungsbereiches 14 in Abhängigkeit von der aktuellen Lage des entgegenkommenden bzw. vorausfahrenden Fahrzeugs, so dass zum einen eine Blendung des entgegenkommenden bzw. vorausfahrenden Fahrzeugs verhindert und zum anderen eine möglichst große Ausleuchtung des Straßenraums gemäß einer Fernlichtverteilung ermöglicht wird. Vorzugsweise werden der linke Projektionsscheinwerfer 2 und der rechte Projektionsscheinwerfer 3 dynamisch um die vertikale Achse bei einem entgegenkommenden Fahrzeug nach und nach nach links verschwenkt, bis das entgegenkommende Fahrzeug die Projektionsscheinwerferanordnung passiert hat. Dabei wird der Lichtaussparungsbereich 14 dem entgegenkommenden Fahrzeug unter Überdeckung desselben nachgeführt. Vorzugsweise verbreitert sich der Lichtaussparungsbereich 14 in Abhängigkeit von der Entfernung des entgegenkommenden Fahrzeugs, so dass der Lichtaussparungsbereich 14 bei einem entgegenkommenden Fahrzeug in großer Entfernung eine relativ kleine Breite und bei einem entgegenkommenden Fahrzeug in geringer Entfernung eine relativ große Breite aufweist. Die Lage des Lichtaussparungsbereiches 14 in horizontaler Richtung sowie die Breite B des Lichtaussparungsbereiches 14 ist derart gewählt, dass das entgegenkommende Fahrzeug in den Lichtaussparungsbereich 14 liegt. Eine breite Ausleuchtung des Straßenraumes für den Fahrzeugführer links und rechts des entgegenkommenden Fahrzeugs wird hierdurch gewährleistet. Dadurch, dass das entgegenkommende Fahrzeug im Lichtaussparungsbereich selbst Licht abstrahlt, ergibt sich für den Fahrzeugführer in horizontaler Richtung eine vollständig leuchtende Fläche.

Die Steuereinheiten 21, 22 wirken jeweils auf die Stelleinheiten 41 bzw. 42 ein, dass in Abhängigkeit von der Verkehrssituation die ersten Blenden 51 der Projektionsscheinwerfer 2, 3 mittels des Schwenkaktors in horizontaler Richtung verschwenkt werden, so dass ein Lichtaussparungsbereich 14 vorgegebner Breite erzeugt wird. Der Schwenkaktor der Stelleinheiten 41, 42 kann auch zur Erzeugung eines Kurvenlichtes eingesetzt werden, wobei sich die Blendeneinrichtungen der Projektionsscheinwerfer 2, 3 in einer Abblendlicht-Betriebsstellung oder Fernlicht-Betriebsstellung befinden können. Darüber hinaus kann die Stelleinheit 41, 42 einen Schwenkaktor aufweisen zur Verstellung der Projektionsscheinwerfer 2, 3 um eine horizontale Achse, die quer zur optischen Achse verläuft. Hierdurch kann die horizontale Hell-Dunkel-Grenze nach oben oder unten verschoben werden.

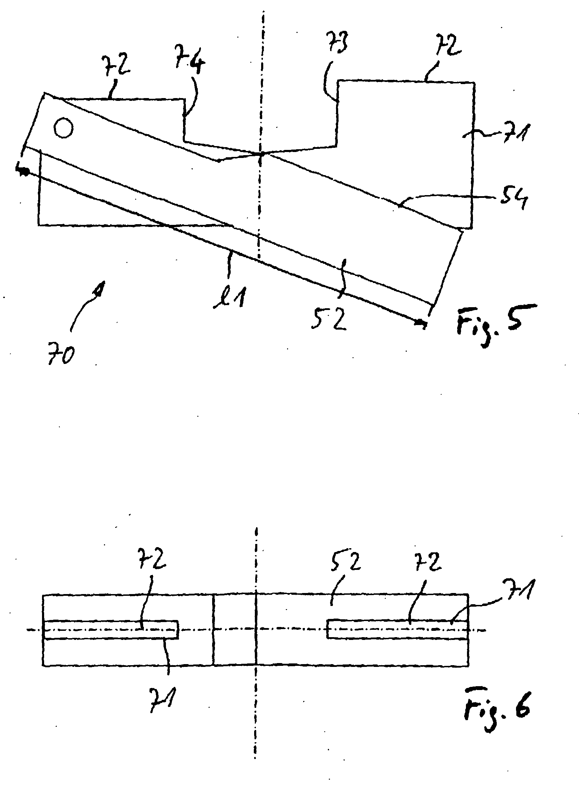

Nach einer zweiten Ausführungsform der Erfindung gemäß den Figuren 5 und 6 ist eine Blendeneinrichtung 70 vorgesehen, die sich von der Blendeneinrichtung 50 dadurch unterscheidet, dass eine erste Blende 71 neben im Wesentlichen horizontalen Blendenkantenbereichen 72 einen sprungförmigen (vertikalen) ersten Blendenkantenbereich 73 und einen sprungförmigen (vertikalen) zweiten Blendenkantenbereich 74 aufweist. Vorteilhaft können hierdurch mittels eines Projektionsscheinwerfers 2, 3 zwei vertikale Hell-Dunkel-Grenzen einer Teillichtverteilung TL, TR erzeugt werden. Hierdurch können mehrere Lichtaussparungsbereiche der Fernlichtverteilung erzeugt werden, so dass eine Abschattung von mindestens zwei unterschiedlich positionierten Fahrzeugen im Fahrzeugvorfeld ermöglicht wird.

Im Übrigen stimmt der Aufbau der Blendeneinrichtung 70 mit dem Aufbau der Blendeneinrichtung 50 überein, wobei insbesondere die erste Blende 71 die gleiche Länge 11 aufweist, wie die zweite Blende 52.

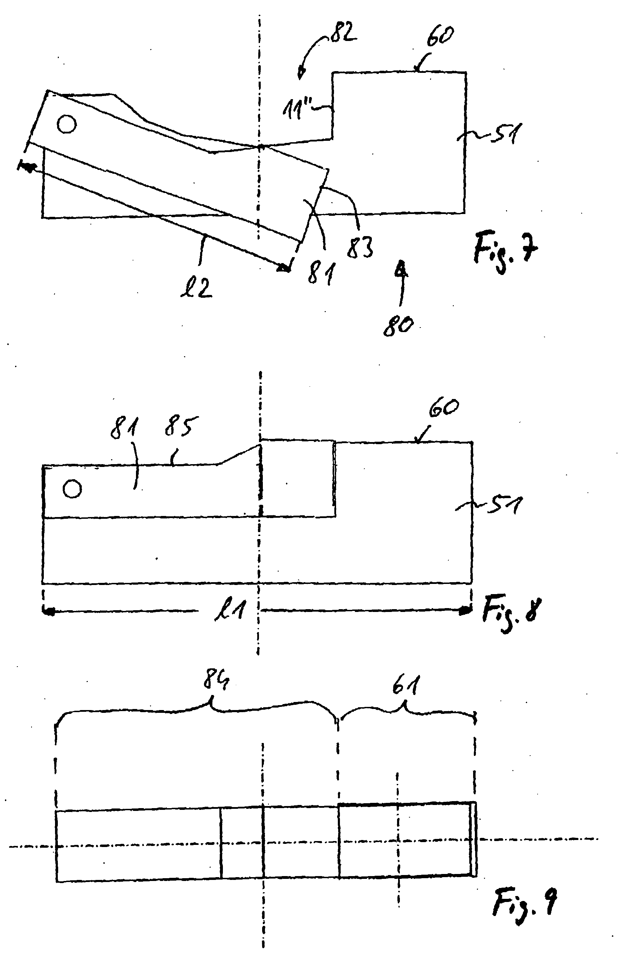

Nach einer dritten Ausführungsform der Erfindung gemäß den Figuren 7 bis 9 ist eine Blendeneinrichtung 80 vorgesehen, die eine zu der Blendeneinrichtung 50 übereinstimmende erste Blende 51 und eine im Vergleich zur Blendeneinrichtung 50 verkürzte zweite Blende 81 aufweist. Die zweite Blende 81 weist eine Länge 12 auf, derart, dass in der Abblendlicht-Betriebsstellung gemäß Figur 8 lediglich eine Überdeckung der zweiten Blende 81 bis zu einer Auskehlung 82 derselben erfolgt. Beispielsweise kann eine freie Stirnseite 83 der zweiten Blende 81 den sprungförmigen Blendenkantenbereich 11'' der ersten Blende 51 überdecken oder an dieser anliegen. Somit wird in der Abblendlicht-Betriebsstellung die resultierende Blendenkante in einem ersten Abschnitt 61 der Blendeneinrichtung 80 ausschließlich durch die Blendenkantenoberfläche 60 der ersten Blende 51 und in einem zweiten Abschnitt 84 der Blendeneinrichtung 80 ausschließlich durch eine Blendenkäntenoberfläche 85 der zweiten Blende 81 gebildet. Vorteilhaft kann hierdurch Material der schwenkbaren Blende 81 eingespart werden, wenn es auf die Verringerung des Farbsaumeffektes in einem Teilbereich der resultierenden Blendenkante nicht ankommt.

Gleiche Bauteile bzw. Bauteilfunktionen sind mit den gleichen Bezugsziffern versehen.

Der Erfindung liegt der Gedanke zugrunde, dass in einer Betriebsstellung (Abblendlicht-Betriebsstellung) eine Hell-Dunkel-Grenze der Lichtverteilung (Teillichtverteilung) unter Überlagerung von Blendenkanten mindestens zweier Blenden 51, 52; 61, 81 in Längsrichtung und/oder in Querrichtung erzeugt wird.

## Patentansprüche

1. Projektionsscheinwerferanordnung für Fahrzeuge mit einem linken Projektionsscheinwerfer (2) und einem rechten Projektionsscheinwerfer (3), die jeweils enthalten:
- einen zwei Brennorte aufweisenden schalenförmigen Reflektor (5),
- eine in einem ersten Brennort des Reflektors (5) angeordnete Lichtquelle (4),
- eine Linse (6), deren Brennpunkt in der Nähe des zweiten Brennortes des Reflektors (5) angeordnet ist,
- eine Blendeneinrichtung (50, 70, 80), die zwischen der Linse (6) und dem Reflektor (5) angeordnet ist und die mindestens eine Blendenkante (53) aufweist zur Erzeugung einer Hell-Dunkel-Grenze einer Lichtverteilung (G),
dass die Blendeneinrichtung (50, 70, 80) eine feststehende erste Blende (51, 71) zur Erzeugung einer Fernlichtverteilung und eine um eine parallel zur optischen Achse verlaufende Drehachse (D) schwenkbar gelagerte zweite Blende (52, 81) zur Erzeugung einer Abblendlichtverteilung aufweist, wobei die erste Blende (51, 71) mit der zweiten Blende (52, 81) derart zusammenwirkt, dass in einer Betriebsstellung der Blendeneinrichtung (50, 70, 80) zumindest bereichsweise eine Blendenkantenoberfläche durch zumindest einen Teil einer Blendenkantenoberfläche (60) der ersten Blende (51, 71) und zumindest einen Teil einer Blendenkantenoberfläche (58, 59, 85) der zweiten Blende (52, 81) gebildet ist, **dadurch gekennzeichnet, dass** die erste Blende (51, 71) mindestens einen vertikalen sprungsförmigen Blendenkantenbereich aufweist zur Erzeugung einer vertikalen Hell-Dunkel-Grenze in der Fernlicht-Betriebsstellung der Blendeneinrichtung (50, 70, 80) und dass zumindest die erste Blende (51, 71) des linken Projektionsscheinwerfers (2) und des rechten Projektionsscheinwerfers (3) derart ansteuerbar sind, dass in der Fernlicht-Betriebsstellung mittels der ersten Blende (51, 71) des linken Projektionsscheinwerfers (2) eine erste Teillichtverteilung (TL) mit einer ersten vertikalen Flanke (15) und mittels der ersten Blende (51, 71) des rechten Projektionsscheinwerfers (3) eine zweite Teillichtverteilung (TR) mit einer zweiten vertikalen Flanke (16) gebildet wird, wobei zwischen der ersten Flanke (15) und der zweiten Flanke (16) ein Lichtaussparungsbereich (14) gebildet ist.

2. Projektionsscheinwerferanordnung nach Anspruch 1, **dadurch gekennzeichnet, dass** die zweite Blende (52, 81) zwei synchron verschwenkbare Blendenflügel (55, 56) aufweist, zwischen denen die erste Blende (51, 71) angeordnet ist.

3. Projektionsscheinwerferanordnung nach Anspruch 1 oder 2, **dadurch gekennzeichnet, dass** die erste Blende (51, 71) in einer Brennfläche der Linse (6) angeordnet ist, derart, dass eine Blendenkante (60) der ersten Blende (51, 71) zu einer scharfen Hell-Dunkel-Grenze der Fernlichtverteilung abgebildet wird.

4. Projektionsscheinwerferanordnung nach einem der Ansprüche 1 bis 3, **dadurch gekennzeichnet, dass** die erste Blende (51, 71) plattenförmig ausgebildet ist und dass eine Breite (b1) der Blendenkantenoberfläche (60) der ersten Blende (51, 71) kleiner ist als eine Breite (b2) der Blendenkantenoberfläche (58, 59) der Blendenflügel (55, 56) der zweiten Blende (52, 81).

5. Projektionsscheinwerferanordnung nach einem der Ansprüche 1 bis 4, **dadurch gekennzeichnet, dass** die Blendenkantenoberflächen (58, 59) der Blendenflügel (55, 56) der zweiten Blende (52, 81) in der Abblendlicht-Betriebsstellung sich an gegenüberliegenden Seiten bündig zu der Blendenkantenoberfläche (60) der ersten Blende (51, 71) anschließen.

6. Projektionsscheinwerferanordnung nach einem der Ansprüche 1 bis 5, **dadurch gekennzeichnet, dass** die Blendenkantenoberfläche (58, 59) der Blendenflügel (55, 56) im Querschnitt bogenförmig verläuft, wobei in der Abblendlichtbetriebsstellung zusammen mit der Blendenkantenoberfläche (60) der ersten Blende (51, 71) abschnittsweise eine im Querschnitt konvexförmige resultierende Blendenkantenoberfläche gebildet ist.

7. Projektionsscheinwerferanordnung nach einem der Ansprüche 1 bis 6, **dadurch gekennzeichnet, dass** eine Sensoreinheit vorgesehen ist zur Erfassung eines Verkehrsteilnehmers in einem Fahrzeugvorfeld, dass eine Steuereinheit vorgesehen ist, an deren Eingang ein Sensorsignal der Sensoreinheit anliegt, dass eine Stelleinheit zur Verstellung der Blendeneinrichtung (50, 70, 80) und/oder des Projektionsscheinwerfers (2, 3) vorgesehen ist, an dessen Eingang ein Steuersignal der Steuereinheit derart anliegt, dass in Abhängigkeit von dem die aktuelle Position eines entgegenkommenden und/oder vorausfahrenden Fahrzeugs ermittelnden Sensorsignals zumindest die Blendeneinrichtung (50, 70, 80) des linken Projektionsscheinwerfers (2) und/oder des rechten Projektionsscheinwerfers (3) um eine vertikale Achse verschwenkt wird, so dass das im Fahrzeugvorfeld befindliche Fahrzeug zumindest teilweise stets innerhalb des Lichtaussparungsbereichs (14) liegt.

8. Projektionsscheinwerferanordnung nach einem der Ansprüche 1 bis 7, **dadurch gekennzeichnet, dass** die Blendenkante der Blendeneinrichtung (80) in der Abblendlicht-Betriebsstellung in einem ersten Abschnitt (61) derselben ausschließlich durch die Blendenkantenoberfläche der ersten Blende (51) und in einem zweiten Abschnitt (84) ausschließlich durch die Blendenkantenoberfläche der zweiten Blende (81) gebildet ist.

9. Projektionsscheinwerferanordnung nach einem der Ansprüche 1 bis 8, **dadurch gekennzeichnet, dass** die Blendenflügel (55, 56) der zweiten Blende (51, 81) unter Bildung einer gegen eine Blendenfläche (57) der ersten Blende (51, 71) gerichteten Vorspannungskraft gelagert sind.

10. Projektionsscheinwerferanordnung nach einem der Ansprüche 1 bis 9, **dadurch gekennzeichnet, dass** die erste Blende (51, 71) und die zweite Blende (52, 81) eine gemeinsame Längsmittelebene (L1, L2) aufweisen.

## Claims

1. Projection headlight assembly for vehicles with a left-hand projection headlight (2) and a right-hand projection headlight (3), respectively containing:
- a dish-shaped reflector (5) with two focal positions,
- a light source (4) arranged in a first focal position of the reflector (5),
- a lens (6), the focal point of which is arranged in the vicinity of the second focal position of the reflector (5),
- a diaphragm apparatus (50, 70, 80), which is arranged between the lens (6) and the reflector (5) and which has at least one diaphragm edge (53) for producing a light/dark boundary of a light distribution (G),
wherein the diaphragm apparatus (50, 70, 80) has a stationary first diaphragm (51, 71) for producing a full-beam distribution and a second diaphragm (52, 81), pivotably mounted about a rotational axis (D) which runs parallel to the optical axis, for producing a dipped-beam distribution, wherein the first diaphragm (51, 71) interacts with the second diaphragm (52, 81) such that in one operational position of the diaphragm apparatus (50, 70, 80) a diaphragm edge surface is, at least in regions, formed by at least one part of a diaphragm edge surface (60) of the first diaphragm (51, 71) and at least one part of a diaphragm edge surface (58, 59, 85) of the second diaphragm (52, 81), **characterized in that** the first diaphragm (51, 71) has at least one vertical step-shaped diaphragm edge region for producing a vertical light/dark boundary in the full-beam operational position of the diaphragm apparatus (50, 70, 80) and **in that** at least the first diaphragm (51, 71) of the left-hand projection headlight (2) and the right-hand projection headlight (3) can be actuated such that, in the full-beam operational position, the first diaphragm (51, 71) of the left-hand projection headlight (2) is used to form a first partial light distribution (TL) with a first vertical flank (15) and the first diaphragm (51, 71) of the right-hand projection headlight (3) is used to form a second partial light distribution (TR) with a second vertical flank (16), with a light gap region (14) being formed between the first flank (15) and the second flank (16).

2. Projection headlight assembly according to Claim 1, **characterized in that** the second diaphragm (52, 81) has two diaphragm blades (55, 56) which can be pivoted in synchronized fashion and between which the first diaphragm (51, 71) is arranged.

3. Projection headlight assembly according to Claim 1 or 2, **characterized in that** the first diaphragm (51, 71) is arranged in a focal area of the lens (6) such that a diaphragm edge (60) of the first diaphragm (51, 71) is imaged to form a sharp light/dark boundary of the full-beam distribution.

4. Projection headlight assembly according to one of Claims 1 to 3, **characterized in that** the first diaphragm (51, 71) has a plate-shaped design and **in that** a width (b1) of the diaphragm edge surface (60) of the first diaphragm (51, 71) is less than a width (b2) of the diaphragm edge surface (58, 59) of the diaphragm blades (55, 56) of the second diaphragm (52, 81).

5. Projection headlight assembly according to one of Claims 1 to 4, **characterized in that**, in the dipped-beam operational position, the diaphragm edge surfaces (58, 59) of the diaphragm blades (55, 56) of the second diaphragm (52, 81) adjoin the diaphragm edge surface (60) of the first diaphragm (51, 71) in a flush manner on opposing sides.

6. Projection headlight assembly according to one of Claims 1 to 5, **characterized in that** the diaphragm edge surface (58, 59) of the diaphragm blades (55, 56) has an arc-shaped cross section, wherein, in the dipped-beam operational position, a diaphragm edge surface, which results in a convex shape in cross section, is formed in sections together with the diaphragm edge surface (60) of the first diaphragm (51, 71).

7. Projection headlight assembly according to one of Claims 1 to 6, **characterized in that** provision is made for a sensor unit for detecting a road user ahead of the vehicle, **in that** provision is made for a control unit, with a sensor signal from the sensor unit being applied to the input thereof, **in that** provision is made for an actuation unit for adjusting the diaphragm apparatus (50, 70, 80) and/or the projection headlight (2, 3), with a control signal from the control unit being applied to the input thereof such that, depending on the sensor signal that establishes the current position of an oncoming vehicle or a vehicle ahead, at least the diaphragm apparatus (50, 70, 80) of the left-hand projection headlight (2) and/or of the right-hand projection headlight (3) is pivoted about a vertical axis such that the vehicle in front of the vehicle at least in part is always situated within the light gap region (14).

8. Projection headlight assembly according to one of Claims 1 to 7, **characterized in that**, in the dipped-beam operational position, the diaphragm edge of the diaphragm apparatus (80) is, in a first section (61) of same, only formed by the diaphragm edge surface of the first diaphragm (51) and, in a second section (84) , only formed by the diaphragm edge surface of the second diaphragm (81).

9. Projection headlight assembly according to one of Claims 1 to 8, **characterized in that** the diaphragm blades (55, 56) of the second diaphragm (51, 81) are mounted under the formation of a pretension force directed against a diaphragm area (57) of the first diaphragm (51, 71).

10. Projection headlight assembly according to one of Claims 1 to 9, **characterized in that** the first diaphragm (51, 71) and the second diaphragm (52, 81) have a common longitudinal central plane (L1, L2).

## Revendications

1. Ensemble de phare de projection pour véhicule, présentant un phare de projection gauche (2) et un phare de projection droit (3) qui contiennent chacun :
- un réflecteur (5) en forme de coquille à deux foyers,
- une source d'éclairage (4) disposée en un premier foyer du réflecteur (5),
- une lentille (6) dont le foyer est disposé à proximité du deuxième foyer du réflecteur (5) et
- un dispositif d'obturation (50, 70, 80) disposé entre la lentille (6) et le réflecteur (5) et présentant au moins un bord (53) d'obturateur permettant de former une limite clarté-obscurité d'une répartition d'éclairage (G),
le dispositif d'obturation (50, 70, 80) présentant un premier obturateur (51, 71) fixe destiné à former une répartition fine de l'éclairage et un deuxième obturateur (52, 81) monté à pivotement autour d'un axe de rotation (D) parallèle à l'axe optique et servant à former une répartition d'éclairage en code,
le premier obturateur (51, 71) coopérant avec le deuxième obturateur (52, 81) de telle sorte que dans une position de fonctionnement du dispositif d'obturation (50, 70, 80), au moins certaines parties d'une surface de bord d'obturation soient formées par au moins une partie d'une surface (60) de bord d'obturation du premier obturateur (51, 71) et au moins une partie d'une surface de bord d'obturation (58, 59, 85) du deuxième obturateur (52, 81),
**caractérisé en ce que**
le premier obturateur (51, 71) présente au moins une partie de bord d'obturation en forme de saut vertical qui sert à former une limite verticale clarté-obscurité dans la position de fonctionnement d'éclairage lointain du dispositif d'obturation (50, 70, 80) et
**en ce qu'**au moins le premier obturateur (51, 71) du phare de projection gauche (2) et du phare de projection droit (3) peut être commandé de telle sorte que dans la position de fonctionnement d'éclairage lointain, il forme au moyen du premier obturateur (51, 71) du phare de projection gauche (2) une première répartition partielle de l'éclairage (TL) qui présente un premier flanc vertical (15) et au moyen du premier obturateur (51, 71) du phare de projection droit (3) une deuxième répartition partielle de l'éclairage (TR) qui présente un deuxième flanc vertical (16) et
**en ce qu'**une zone (14) non éclairée est formée entre le premier flanc (15) et le deuxième flanc (16).

2. Ensemble de phare de projection selon la revendication 1, **caractérisé en ce que** le deuxième obturateur (52, 81) présente deux ailes d'obturateur (55, 56) aptes à pivoter de manière synchronisée et entre lesquelles le premier obturateur (51, 71) est disposé.

3. Ensemble de phare de projection selon les revendications 1 ou 2, **caractérisé en ce que** le premier obturateur (51, 71) est disposé sur une surface focale de la lentille (6) de telle sorte qu'un bord d'obturation (50) du premier obturateur (51, 71) soit transformé en une limite nette clarté-obscurité de la répartition fine de l'éclairage.

4. Ensemble de phare de projection selon l'une des revendications 1 à 3, **caractérisé en ce que** le premier obturateur (51, 71) a la forme d'une plaque et **en ce que** la largeur (b1) de la surface de bord d'obturation (60) du premier obturateur (51, 71) est plus petite que la largeur (b2) de la surface (58, 59) de bord d'obturation de l'aile d'obturateur (55, 56) du deuxième obturateur (52, 81).

5. Ensemble de phare de projection selon l'une des revendications 1 à 4, **caractérisé en ce que** dans la position de fonctionnement d'éclairage en code, les surfaces (58, 59) de bord d'obturation des ailes d'obturateur (55, 56) du deuxième obturateur (52, 81) se raccordent sur des côtés opposés à chant par rapport à la surface (60) de bord d'obturation du premier obturateur (51, 71).

6. Ensemble de phare de projection selon l'une des revendications 1 à 5, **caractérisé en ce que** les surfaces (58, 59) de bord d'obturation des ailes d'obturateur (55, 56) ont une section transversale arquée, certaines parties d'une surface résultante de bord d'obturation de section transversale convexe étant formées en position de fonctionnement en éclairage code avec la surface (60) de bord d'obturation du premier obturateur (51, 71).

7. Ensemble de phare de projection selon l'une des revendications 1 à 6, **caractérisé en ce qu'**une unité de détection est prévue pour détecter la présence d'un participant au trafic à l'avant du véhicule, **en ce qu'**il présente une unité de commande à l'entrée de laquelle est appliqué un signal de détecteur de l'unité de détection, **en ce qu'**il présente une unité de réglage servant à ajuster le dispositif d'obturation (50, 70, 80) et/ou le phare de projection (2, 3) à l'entrée de laquelle un signal de commande de l'unité de commande est appliqué de telle sorte qu'en fonction du signal de détecteur qui définit la position en cours d'un véhicule venant en sens inverse et/ou se déplaçant à l'avant, au moins le dispositif d'obturation (50, 70, 80) du phare de projection gauche (2) et/ou du phare de projection droit (3) soit pivoté autour d'un axe vertical de telle sorte que le véhicule présent à l'avant du véhicule soit toujours situé au moins en partie à l'intérieur de la zone (14) non éclairée.

8. Ensemble de phare de projection selon l'une des revendications 1 à 7, **caractérisé en ce que** dans la position de fonctionnement en éclairage code, une première partie (61) du bord d'obturation du dispositif d'obturation (80) est formée exclusivement par la surface de bord d'obturation du premier obturateur (51) et qu'une deuxième partie (84) est formée exclusivement par la surface de bord d'obturation du deuxième obturateur (81).

9. Ensemble de phare de projection selon l'une des revendications 1 à 8, **caractérisé en ce que** les ailes d'obturateur (55, 56) du deuxième obturateur (51, 81) sont montées de manière à former une force de précontrainte orientée à l'opposé de la surface d'obturation (57) du premier obturateur (51, 71).

10. Ensemble de phare de projection selon l'une des revendications 1 à 9, **caractérisé en ce que** le premier obturateur (51, 71) et le deuxième obturateur (52, 81) présentent un plan central longitudinal (L1, L2) commun .
